(19) Europäisches Patentamt
European Patent Office
Office européen des brevets

(11) **EP 4 764 620 A1**

(12) **EUROPEAN PATENT APPLICATION**

(43) Date of publication:
24.06.2026 Bulletin 2026/26

(21) Application number: 25222456.3

(22) Date of filing: 11.12.2025

(51) International Patent Classification (IPC):
**G02B 1/00** *(2006.01)* **G02B 1/118** *(2015.01)*
**G02B 5/18** *(2006.01)* **G02B 1/115** *(2015.01)*

(52) Cooperative Patent Classification (CPC):
**G02B 1/002; G02B 1/115; G02B 1/118;**
**G02B 5/1809; G02B 5/1866;** G02B 5/1871

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **17.12.2024 JP 2024220554**

(71) Applicant: **Canon Kabushiki Kaisha**
**Tokyo, 146-8501 (JP)**

(72) Inventor: **UCHIDA, Kazue**
**Tokyo (JP)**

(74) Representative: **WESER & Kollegen**
**Patentanwälte PartmbB**
**Radeckestraße 43**
**81245 München (DE)**

(54) **OPTICAL ELEMENT, OPTICAL SYSTEM, AND IMAGE PICKUP APPARATUS**

(57) An optical element (101 to 106) includes a substrate (50), and an undulation structure (41 to 46) formed on the substrate, including a first antireflection film (11) having one or more layers formed opposite to the substrate, and a plurality of undulation zones, and each undulation zone includes a plurality of structures (10). Predetermined inequalities are satisfied.

FIG. 1A

102

42 { 11, 10, 12

50

H0  H2

60  P

i-TH ANNULUS    (i+1)-TH ANNULUS

FIG. 1B

103

43 { 11, 10, 13, 12

50

H0  H3

60  P

i-TH ANNULUS    (i+1)-TH ANNULUS

FIG. 1C

50

W

60  P

i-TH ANNULUS    (i+1)-TH ANNULUS

FIG. 1D

**Description**

BACKGROUND

Technical Field

The present disclosure relates to one or more embodiments of an optical element such as a metalens.

Description of the Related Art

As an optical element in an optical system for imaging, a metalens formed with a fine undulation (uneven or concavo-convex) structure on a surface of a substrate and having a light converging or diverging function by utilizing diffraction is known. PCT International Publication No. WO2022/150816 discloses a metalens in which reflection of the optical element is reduced by providing an antireflection film above or below a fine undulation structure.

SUMMARY

The present disclosure in its first aspect provides an optical element as specified in claims 1 to 16.
The present disclosure in its second aspect provides an optical system as specified in claim 17.
The present disclosure in its third aspect provides an image pickup apparatus as specified in claim 18.
Features of the present disclosure will become apparent from the following description of embodiments with reference to the attached drawings. The following description of embodiments is described by way of example.

BRIEF DESCRIPTION OF THE DRAWINGS

Figs. 1A, 1B, 1C, and 1D are schematic diagrams illustrating optical elements according to representative examples.
Figs. 2A and 2B illustrate an optical element according to a comparative example.
Figs. 3A, 3B, and 3C illustrate a method of manufacturing the optical element according to this example.
Fig. 4 illustrates a relationship between the shape and phase modulation amount of an optical element according to Example 1.
Fig. 5 illustrates the reflectance characteristic of an optical element according to Example 1.
Fig. 6 illustrates the reflectance characteristic of an optical element according to Example 2.
Fig. 7 illustrates the reflectance characteristic of an optical element according to Example 3.
Fig. 8 illustrates the reflectance characteristics of optical elements according to Examples 4, 5, and 6 and comparative example 2.
Fig. 9 illustrates the reflectance characteristic of an optical element according to Example 7.
Fig. 10 illustrates the reflectance characteristic of an optical element according to Example 8.
Fig. 11 illustrates the reflectance characteristic of an optical element according to Example 9.
Fig. 12 illustrates the reflectance characteristics of optical elements according to Example 10 and comparative example 4.
Figs. 13A, 13B, 13C, 13D, and 13E are schematic diagrams illustrating optical elements according to other examples and comparative examples.
Fig. 14 illustrates the reflectance characteristic of an optical element according to Example 11.
Fig. 15 illustrates the reflectance characteristic of an optical element according to Example 12.
Fig. 16 illustrates the reflectance characteristic of an optical element according to Example 13.
Figs. 17A, 17B, 17C, and 17D are schematic diagrams illustrating optical elements according to other examples and comparative examples.
Figs. 18A, 18B, 18C, 18D, 18E, and 18F illustrate a method of manufacturing the optical elements illustrated in Figs. 17A, 17B, 17C, and 17D.
Fig. 19 illustrates the reflectance characteristic of an optical element according to Example 14.
Fig. 20 illustrates the reflectance characteristic of an optical element according to Example 15.
Fig. 21 illustrates the reflectance characteristic of an optical element according to Example 16.
Fig. 22 illustrates the reflectance characteristics of optical elements according to Examples 17 and 18 and comparative example 7.
Fig. 23 illustrates an optical system using optical elements according to Examples 1 to 18.
Fig. 24 illustrates an image pickup apparatus using the above-described optical system.

Fig. 25 illustrates the reflectance characteristic of an optical element according to comparative example 1.

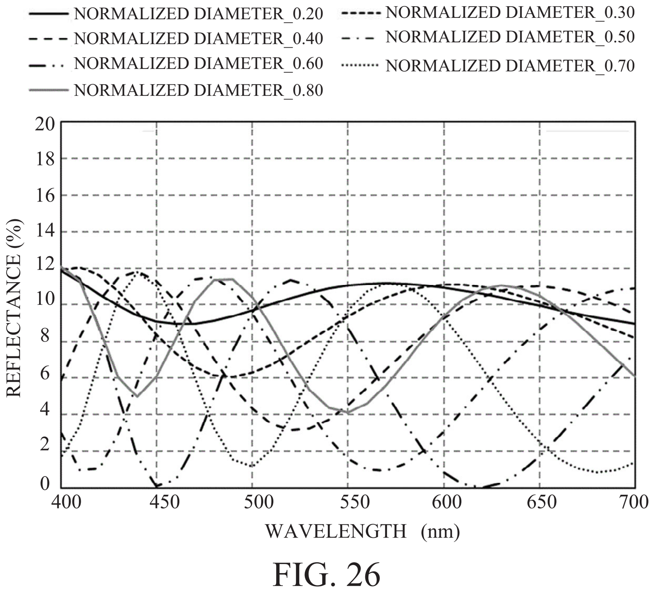

Fig. 26 illustrates the reflectance characteristic of an optical element according to comparative example 3.
Fig. 27 illustrates the reflectance characteristic of an optical element according to comparative example 5.
Fig. 28 illustrates the reflectance characteristic of an optical element according to comparative example 6.

DESCRIPTION OF THE EMBODIMENTS

Examples according to the disclosure will be described below with reference to the accompanying drawings.

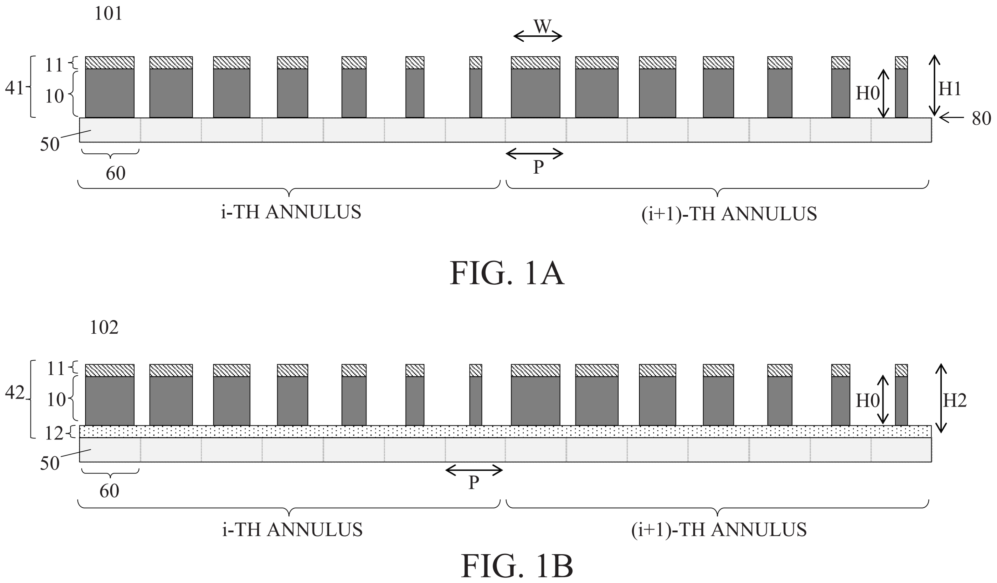

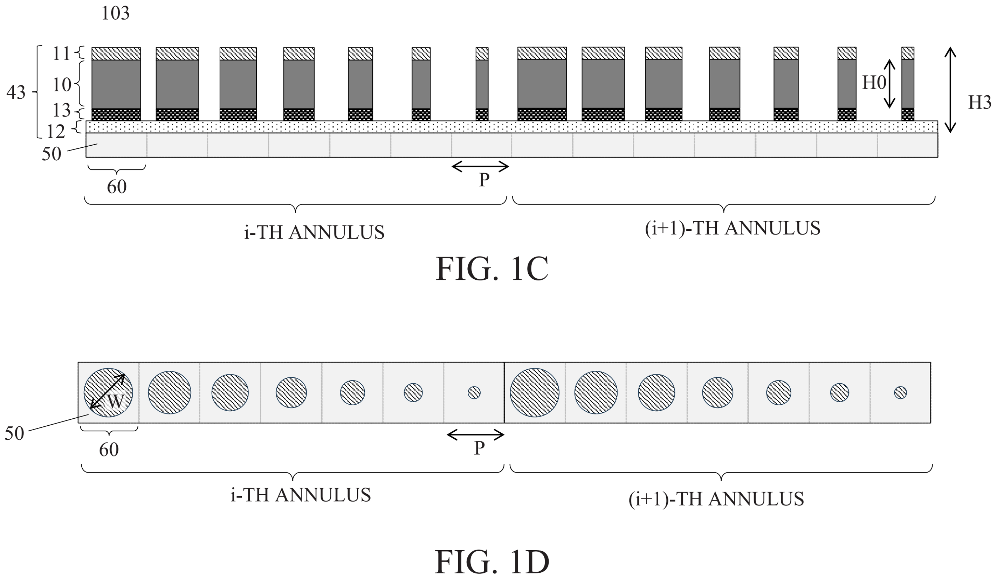

Figs. 1A, 1B, 1C, and 1D illustrate optical elements of representative examples of the disclosure. Figs. 1A, 1B, and 1C illustrate sections of optical elements 101, 102, and 103, respectively, in the radial direction, and Fig. 1D illustrates the optical element 101 viewed from top. The optical elements 102 and 103 viewed from top are similar to the optical element 101 viewed from top.

The optical elements 101, 102, and 103 include a substrate 50 and undulation (uneven of concavo-convex) structures 41, 42, and 43, respectively, formed on the substrate 50 (on a first surface that is a surface of the substrate 50). Each undulation structure includes annuli i, i+1, ... as a plurality of undulation zones periodically arranged. Each annulus includes a plurality of structures in a direction along the first surface (a radial direction of the substrate 50 in Figs. 1A, 1B, 1C, and 1D). A plurality of convex elements (convex portions) 10 as the plurality of structures in each annulus are disposed at a predetermined pitch, in other words, periodically in the radial direction of the substrate 50. A plurality of concave elements (concave portions) are formed between the plurality of convex elements 10. The widths of the plurality of convex elements 10 and the plurality of concave elements in the radial direction of the substrate 50 are different from each other in each annulus (gradually decrease or increase). In this manner, by periodically forming the plurality of annuli i, i+1, ..., each serving as a phase difference imparting structure, in the radial direction of the substrate 50, each of the optical elements 101 to 103 functions as a metalens having an incident-light converging or diverging function.

A first antireflection film 11 is provided opposite to the substrate 50 in the undulation structures 41 to 43, more specifically, at a portion above each convex element 10 (between the convex element 10 and air) within a width of each of the convex elements 10 in the direction along the first surface.

The undulation structure 42 of the optical element 102 includes, in addition to the first antireflection film 11, a second antireflection film 12 provided so as to cover the substrate 50 (first surface). The undulation structure 43 of the optical element 103 includes, in addition to the first antireflection film 11 and the second antireflection film 12, a third antireflection film 13 provided below each convex element 10 between the second antireflection film 12 and the convex element 10 (that is, within the width of the convex element 10 in the direction along the first surface). Each of the first to third antireflection films 11 to 13 is a single-layer film or a multilayer film including one or more layers (low-refractive-index layer or high-refractive-index layer). In the following description, the first to third antireflection films 11 to 13 will be simply referred to as antireflection films 11 to 13.

In the optical elements 101 to 103, the substrate 50 is a light-transmitting flat plate. However, the substrate 50 may be a planar mirror that reflects incident light or may be a curved plate. The material of the substrate 50 may be synthetic quartz, inorganic glass, organic material such as plastic, ceramics, metal, or the like.

The undulation structures 41 to 43 provide a converging or diverging effect by imparting a phase difference to light passing through the undulation structures. More specifically, each of the plurality of annuli i, i+1, ..., including a plurality of structures (convex elements and concave elements) having mutually different widths provide a phase distribution of $2m\pi$ (diffraction order m = 1, 2, ...) to light of a design wavelength, thereby exhibiting a light condensing effect equivalent to that of a diffractive optical element (DOE).

Each of the convex elements 10 in the undulation structures 41 to 43 has a cylindrical shape. The shape of each convex element 10 is not limited to a cylindrical shape but may be a prismatic shape.

The convex elements 10 are disposed at the centers of unit partitions (segments) 60 divided into square shapes in the radial and circumferential directions of the substrate 50. The width (pitch) P of each segment 60, that is, the pitch of each convex element 10 is smaller than the wavelength of incident light. Thereby, the incident light undergoes phase modulation in accordance with an effective refractive index determined from an element filling factor that the convex element 10 occupies in the segment 60, irrespective of the shape of the convex element 10. For example, when the incident light is in the visible range (400 to 680 nm), the pitch P may be equal to or smaller than 400 nm, and the pitch P may be further reduced to suppress unnecessary diffracted light. More Specifically, the following inequality may be satisfied:

$$150 \text{ nm} \le P \le 400 \text{ nm} \qquad ... (a)$$

In each annulus, the plurality of convex elements 10 are formed so as to sandwich the concave elements therebetween. In each annulus, a phase distribution of $2m\pi$ is formed by varying the width of the convex elements 10 in the radial direction of the substrate 50.

In the optical elements 101 to 103, the convex elements 10 have a constant height H0 [nm] in all areas. In the optical element 101, the undulation structure 41 including the antireflection film 11 has a constant height H1 [nm] in all areas. In the optical element 102, the undulation structure 42 including the antireflection films 11 and 12 has a constant height H2 [nm] in all areas. In the optical element 103, the undulation structure 43 including the antireflection film 11 to 13 has a constant height H3 [nm] in all areas.

In the optical elements 101 to 103 in which the heights of the undulation structures are constant in all areas, the width W [nm] of the convex elements 10 (diameters of the cylinders) as constituent components of each undulation structure is changed to form a phase distribution of $2m\pi$ in each annulus. Thereby, the element filling factor of the convex element 10 (and the antireflection films 11 to 13) in each segment 60 is changed. In other words, the element filling factor in the segment 60 decreases as the width of the convex element 10 decreases, and accordingly, a desired phase distribution is formed. In the segment 60 in which the minimum width of the convex element 10 is reduced, the aspect ratio (ratio of the height to the width of the convex element 10) increases. A convex element 10 having a large aspect ratio and relatively elongated potentially deforms, tilts, or flakes when a load is applied due to contact, vibration, or the like or when an external factor such as temperature or pressure changes. Thus, the minimum value of the width W [nm] of each convex element 10 may be equal to or larger than 25 nm.

In Fig. 1D, the segments 60 one-dimensionally disposed in the radial direction of the substrate 50 are illustrated, but in reality, the segments 60 are two-dimensionally disposed in the radial and circumferential directions of the substrate 50 and have an incident-light converging or diverging function in the two-dimensional directions.

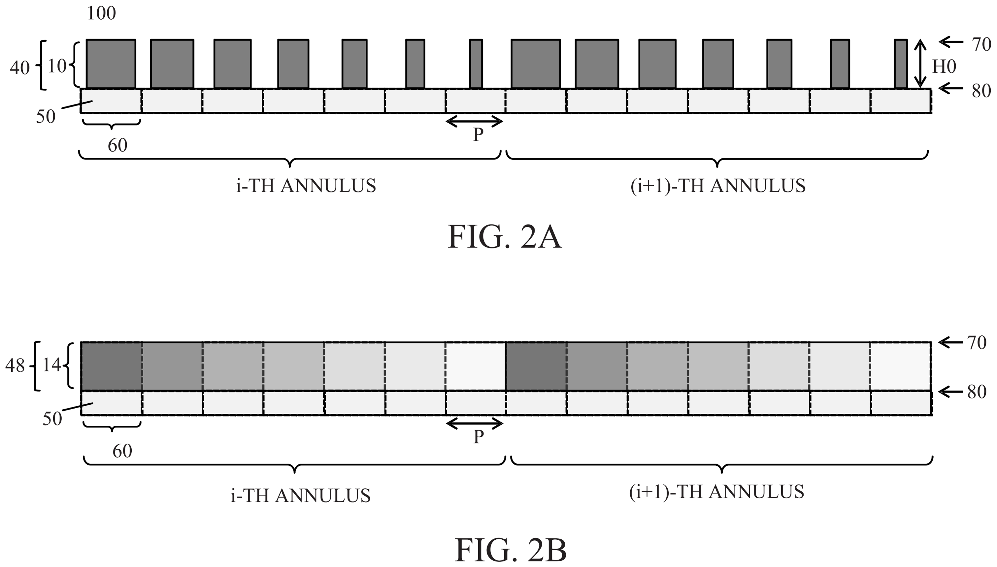

Reflection of incident light in an optical element 100 according to a comparative example will be described below with reference to Figs. 2A and 2B. Fig. 2A illustrates a section of the optical element 100 in the radial direction. The optical element 100 has no antireflection films 11 to 13. That is, the optical element 100 includes the substrate 50 and an undulation structure 40, and the undulation structure 40 includes only convex elements 10 having the height H0 [nm]. In the optical element 100 as well, the element filling factor of the convex elements 10 in the segments 60 are varied to form a phase distribution of $2m\pi$ in each annulus. When the width (pitch) P of each segment 60 is smaller than the wavelength of incident light, light recognizes the convex elements 10, irrespective of their shapes, as film elements 14 having effective refractive indexes determined from the element filling factor of the segments 60, as illustrated in Fig. 2B. That is, the undulation structure 40 in which the width (diameter) of the convex elements 10 illustrated in Fig. 2A vary from a larger value to a smaller value is equivalent a film 48 constituted by a plurality of film element 14 in which the refractive index varies from a larger value to a smaller value (the gray level in the drawing decreases) as illustrated in Fig. 2B.

When light is incident on the film 48, reflection occurs at an interface 70 between air and the film 48 and at an interface 80 between the substrate 50 and the film 48. At this time, since the refractive index of the film 48 changes in the radial direction of the substrate 50, the reflectance characteristic changes in accordance with the in-plane position. That is, an antireflection film needs to be formed to reduce reflection that occurs at the interfaces 70 and 80 and the reflectance of which changes for each segment 60. In the present examples, the optical elements 101 to 103 include one or more antireflection films to reduce reflection that occurs at the above-described interfaces.

In Fig. 2A, in order to reduce reflection at the interface 70 between each convex element 10 and air, the antireflection film 11 is formed above each convex element 10 as illustrated in Fig. 1A. $n_p$ is a refractive index of a first material forming the convex elements 10 as structures for the light with the wavelength of 550 nm, and $\kappa_p$ is an extinction coefficient of the first material. In addition, $n_{1L}$ is a refractive index of a second material for the light with the wavelength of 550 nm, the second material forming any one of one or more layers constituting the antireflection film 11, for example, a layer having the lowest refractive index or a layer farthest from the substrate 50 (closest to the air side). In this case, the following inequalities may be satisfied:

$$1.4 \leq n_p \leq 3.6 \qquad\qquad \ldots (1)$$

$$\kappa_p \leq 0.001 \qquad\qquad \ldots (2)$$

$$0.7 \times \sqrt{n_p} \leq n_{1L} \leq 1.2 \times \sqrt{n_p} \qquad\qquad \ldots (3)$$

The antireflection film 11 can reduce reflection that occurs at the interface 70 between each convex element 10 and air illustrated in Fig. 2A. In this case, in a case where $n_p$ and $n_{1L}$ do not satisfy inequalities (1) and (3), it is difficult to obtain sufficient antireflection performance. In a case where $\kappa_p$ is larger than 0.001, light absorption increases, which makes it difficult to use the optical element over a wide wavelength range from the visible range to the near-infrared range.

The lower limit of inequality (1) may be 1.5 or 2.0, and the upper limit of inequality (1) may be 3.5.

The lower limit of inequality (3) may be $0.8 \times \sqrt{n_p}$ or $0.9 \times \sqrt{n_p}$, and the upper limit of inequality (3) may be $1.1 \times \sqrt{n_p}$.

In the optical element 101 illustrated in Fig. 1A, reflection also occurs at the interface 80 between each convex element 10 and the substrate 50. In order to reduce this reflection, the antireflection film 12 is formed at the interface 80 between each convex element 10 and the substrate 50 so as to cover the substrate 50 as illustrated in Fig. 1B. The following inequality may be satisfied:

$$1.3 \leq n_{2L} \leq 1.7 \qquad \dots (4)$$

where $n_{2L}$ is a refractive index of a third material for the light with the wavelength of 550 nm, the third material forming any one of one or more layers of the antireflection film 12, for example, a layer closest to the convex elements (structures).

The lower limit of inequality (4) may be 1.4, and the upper limit of inequality (4) may be 1.6.

As described above, reflection at the interface 80 occurs due to the refractive index difference between each film element 14 and the substrate 50. In a case where surroundings of the convex elements 10 are air, the refractive index of the film elements 14 is an effective refractive index determined from the filling factor of the convex elements 10 and air. In particular, when the width W of the convex elements 10 is smaller, the refractive index is closer to the refractive index of air. In this case, the following inequality may be satisfied:

$$80 \text{ nm} \leq d_{2L} \leq 200 \text{ nm} \qquad \dots (5)$$

where $d_{2L}$ is a thickness (physical thickness) of the layer of the third material.

In a case where the antireflection film 12 is constituted by repeatedly stacking the third material and a fourth material, the following inequality may be satisfied:

$$n_p \leq n_{2H} \leq 3.0 \qquad \dots (6)$$

where $n_{2H}$ is a refractive index of the fourth material for the light with the wavelength of 550 nm.

The upper limit of inequality (6) may be 2.8 or 2.6.

The antireflection films 11 and 12 illustrated in Fig. 1B can reduce reflection at the interface 70 between each convex element 10 and air and at the interface 80 between each convex element 10 and the substrate 50. In order to further reduce reflection, the antireflection film 13 may be formed at the interface between each convex element 10 and the antireflection film 12 as illustrated in Fig. 1C.

The antireflection film 13 has the same width as the width of the convex elements 10 and is formed only where the convex elements 10 are formed. The following inequality may be satisfied:

$$1.3 \leq n_{3L} \leq 1.7 \qquad \dots (7)$$

where $n_{3L}$ is a refractive index of a fifth material for the light with the wavelength of 550 nm, the fifth material forming any one of one or more layers of the antireflection film 13, for example, a layer closest to the convex elements.

The lower limit of inequality (7) may be 1.4, and the upper limit of inequality (7) may be 1.6.

In a case where the antireflection film 13 is constituted by repeatedly stacking the fifth material and a sixth material, the following inequality may be satisfied:

$$n_p \leq n_{3H} \leq 3.0 \qquad \dots (8)$$

where $n_{3H}$ is a refractive index of the sixth material for the light with the wavelength of 550 nm.

The upper limit of inequality (8) may be 2.8 or 2.6.

The following inequality may be satisfied:

$$1.4 \leq n_s \leq 2.5 \qquad \dots (9)$$

where $n_s$ is a refractive index of a material forming the substrate 50 for the light with the wavelength of 550 nm.

The upper limit of inequality (9) may be 2.3 or 2.1.

The first material forming the convex elements 10 may be a dielectric material including silicon nitride ($Si_3N_4$), titanium oxide ($TiO_2$), gallium nitride (GaN), gallium arsenide (GaAs), silicon carbide (SiC), aluminum oxide ($Al_2O_3$), silicon oxide ($SiO_2$), or the like.

The second material as one of materials forming the antireflection film 11 may be organic resin made of silicon oxide, magnesium fluoride ($MgF_2$), aluminum oxide, fluorine (F), silicon (Si), or the like.

The third material as one of materials forming the antireflection film 12 may be silicon oxide, magnesium fluoride, magnesium oxide (MgO), or the like. The fourth material as another one of materials forming the antireflection film 12 may be silicon nitride, titanium oxide, gallium nitride, gallium arsenide, or silicon carbide, and may be the same as the first material of the convex elements 10.

The fifth material as one of materials forming the antireflection film 13 may be silicon oxide, magnesium fluoride, or magnesium oxide. The sixth material as another one of materials forming the antireflection film 13 may be silicon nitride, titanium oxide, gallium nitride, gallium arsenide, or silicon carbide, and may be the same as the first material of the convex elements 10. The second material, the third material, and the fifth material may be the same material.

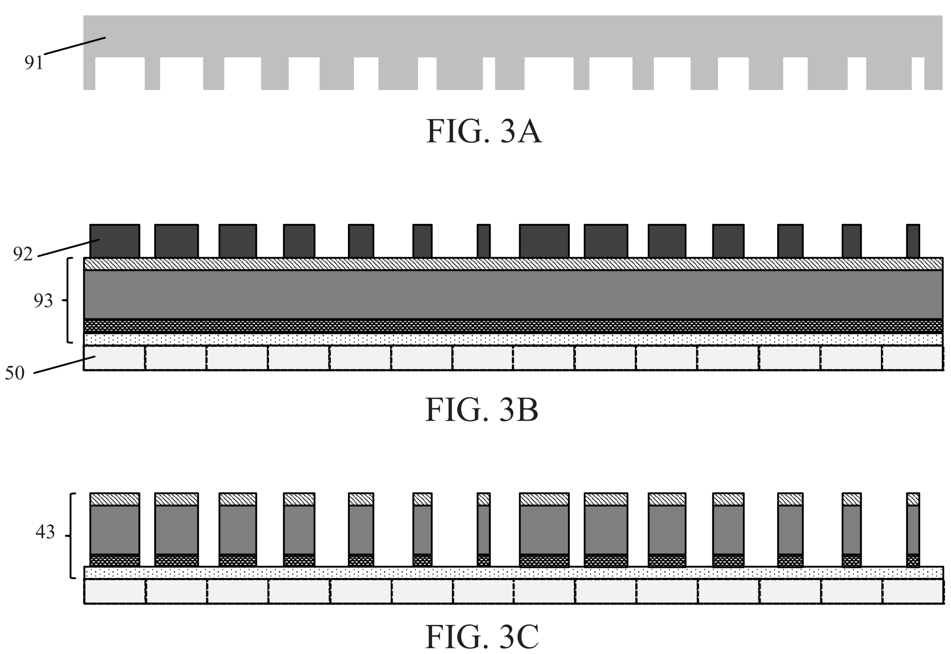

The optical elements 101 to 103 can be manufactured by using lithography technology. As an example, Figs. 3A, 3B, and 3C illustrates processes of manufacturing the optical element 103 by nanoimprint lithography.

Fig. 3A illustrates a mold 91 formed by an electron beam, a laser, or the like and having a shape inverted from the undulation shape of the undulation structure 43. As illustrated in Fig. 3B, a resist material 92 is applied onto a film 93 deposited on the substrate 50, the mold 91 is pressed against the resist material 92, and irradiation with ultraviolet or the like is performed to form, in the resist material 92, a shape inverted from the concavo-convex shape of the mold 91.

Next, etching is performed by using the resist material 92 as a mask to form the undulation structure 43 of the optical element 103. The etching is performed up to the antireflection film 11, the convex elements 10, and the antireflection film 13 and terminated upon reaching the antireflection film 12. Thus, anisotropic etching can be said to be appropriate for production of the undulation structure 42.

After the termination of the etching, the resist material 92 is removed to form the undulation structure 43 of the optical element 103 as illustrated in Fig. 3C.

The method for manufacturing the undulation structure 43 is not limited to the above nanoimprint lithography, and other methods may be employed, such as directly forming the undulation structure with an electron beam, a laser, or the like.

Specific examples 1 to 20 will be described below. Configurations in these examples are merely illustrative, and other configurations may be employed.

EXAMPLES 1 TO 3

An optical element according to Example 1 includes the antireflection film 11 as in the optical element 101 illustrated in Fig. 1A. An optical element according to Example 2 includes the antireflection films 11 and 12 as in the optical element 102 illustrated in Fig. 1B. An optical element according to Example 3 includes the antireflection films 11, 12, and 13 as in the optical element 103 illustrated in Fig. 1C. The optical elements according to Examples 1 to 3 are DOEs that are used in the visible range (wavelength 420 to 680 nm).

In Examples 1 to 3, the substrate 50 is formed of quartz having a refractive index of 1.46 (for the light with the wavelength of 550 nm), and each convex element 10 is formed in a cylindrical shape of silicon nitride having a refractive index of 2.09 (for the light with the wavelength of 550 nm). The convex elements 10 are disposed in respective square segment 60, each having a pitch P of 240 nm, and the height H0 of the convex elements 10 is 700 nm. Each undulation structure has an effective diameter of $\phi$4.0 mm and is constituted by periodically disposing 105 annuli, each providing a phase difference of $2\pi$ (diffraction order = 1) for light with a wavelength of 500 nm. The focal length produced by each undulation structure is 40.0 mm.

Table 1 summarizes the materials and refractive indices of the antireflection films 11 to 13, the convex elements 10, and the substrate 50, as well as the film thicknesses (heights) of the antireflection films 11 to 13 and the convex elements 10, in the optical elements according to Examples 1 to 3. The refractive indices of the materials are values for the light with the wavelength of 550 nm.

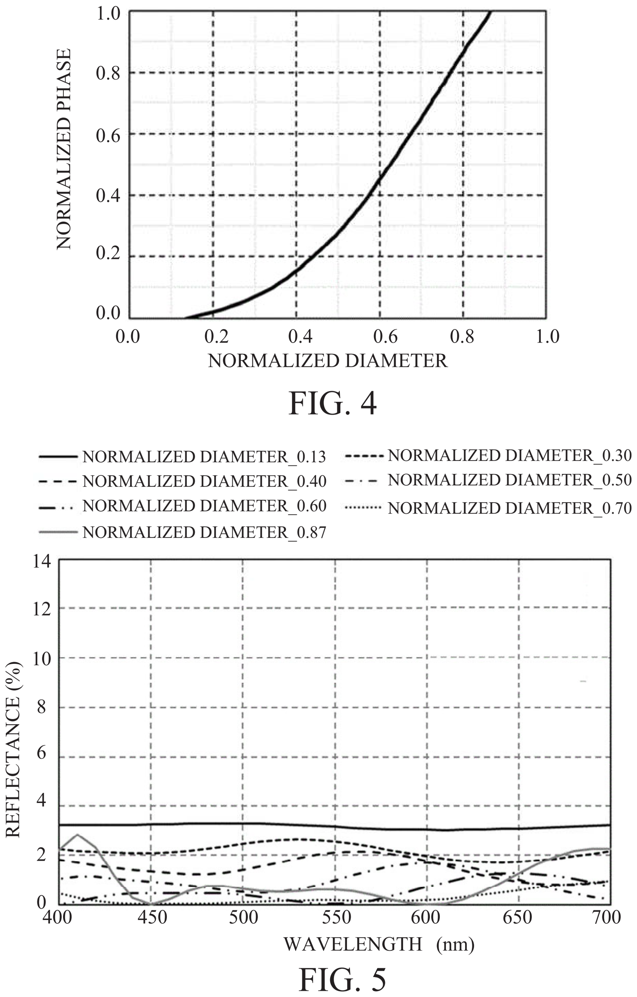

In Fig. 4, the horizontal axis represents a normalized diameter obtained by normalizing a diameter W, which is the width of the convex elements 10 in the optical element according to Example 1, by the segment pitch P, and the vertical axis represents a normalized phase obtained by normalizing the amount of phase modulation for incident light by $2\pi$ (diffraction order m = 1). In the optical element according to Example 1, the phase modulation amount includes the modulation amount at the antireflection film 11 formed on each convex element 10. In Fig. 4, the normalized diameter varies from 0.13 to 0.87 to change the normalized phase difference from 0 to 1.

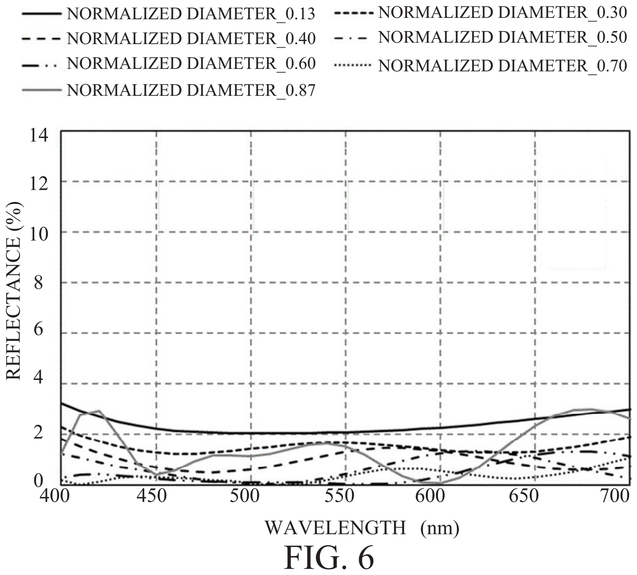

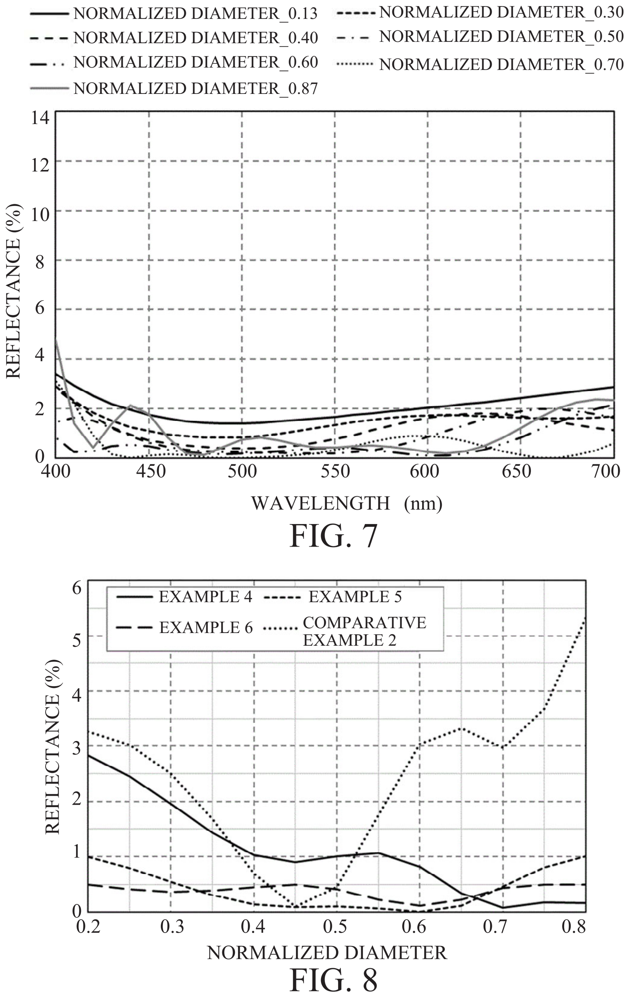

Fig. 5 illustrates the reflectance characteristic when the normalized diameter of the convex elements 10 in the optical element according to Example 1 is 0.13, 0.30, 0.40, 0.50, 0.60, 0.70, and 0.87. The reflectance characteristic in the visible range are all 3.5% or less. Figs. 6 and 7 illustrate the reflectance characteristics when the normalized diameter is similarly varied from 0.13 to 0.87 in the optical elements according to Examples 2 and 3, respectively. The reflectance characteristics of the optical elements according to Examples 2 and 3 in the visible range are 3.0% or less. From these results, it can be understood that the reflectance characteristics (antireflection performance) of the optical elements according to Examples 1 to 3 are excellent.

The antireflection performance is improved in the order according to Examples 1, 2, and 3. From this result, it can be confirmed that the antireflection performance is improved by increasing the number of antireflection films in the order of the antireflection films 11, 12, and 13.

TABLE 1

| | Material | Refractive index | Example 1 Film thickness (nm) | Example 2 Film thickness (nm) | Example 3 Film thickness (nm) |
|---|---|---|---|---|---|
| Antireflection film 11 | $SiO_2$ | 1.46 | 116.8 | 103.5 | 100.9 |
| Convex element 10 | $Si_3N_4$ | 2.09 | 700.0 | 700.0 | 700.0 |
| Antireflection film 13 | $SiO_2$ | 1.46 | | | 7.5 |
| | $Si_3N_4$ | 2.09 | | | 25.2 |
| Antireflection film 12 | $SiO_2$ | 1.46 | | 125.4 | 125.9 |
| | $Si_3N_4$ | 2.09 | | 7.8 | 6.7 |
| Substrate 50 | quartz | 1.46 | | | |

EXAMPLES 4 TO 6

An optical element according to Example 4 includes the antireflection film 11 as in the optical element 101. An optical element according to Example 5 includes the antireflection films 11 and 12 as in the optical element 102. An optical element according to Example 6 includes the antireflection films 11, 12, and 13 as in the optical element 103. The optical elements according to Examples 4 to 6 are DOEs that are used in the infrared range (with a wavelength 800 nm).

In Examples 4 to 6, the substrate 50 is formed of quartz having a refractive index of 1.46 (for the light with the wavelength of 550 nm), and each convex element 10 is formed in a cylindrical shape of silicon nitride having a refractive index of 2.09 (for the light with the wavelength of 550 nm). The convex elements 10 are disposed in respective square segment 60, each having a pitch P of 360 nm, and the height H0 of the convex elements 10 is 1200 nm. Each undulation structure has an effective diameter of $\phi$4.0 mm and is constituted by periodically disposing 105 annuli, each providing a phase difference of $2\pi$ (diffraction order = 1) for light with a wavelength of 800 nm. The focal length produced by each undulation structure is 40.0 mm. In Examples 4 to 6, the normalized diameter of the convex elements 10 is varied from 0.20 to 0.80 to change the normalized phase difference from 0 to 1.

Table 2 summarizes the materials and refractive indices of the antireflection films 11 to 13, the convex elements 10, and the substrate 50, as well as the film thicknesses (heights) of the antireflection films 11 to 13 and the convex elements 10, in the optical elements according to Examples 4 to 6. The refractive indices of the materials are values for the light with the wavelength of 550 nm.

Fig. 8 illustrates the reflectance characteristics for the light with the wavelength of 800 nm when the normalized diameter of the convex elements 10 in the optical elements according to Examples 4 to 6 is varied from 0.20 to 0.80. In the range of the normalized diameter from 0.20 to 0.80, the reflectance characteristic of the optical element according to Example 4 is 3.0% or less, and the reflectance characteristics of the optical elements according to Examples 5 and 6 are 1.0% or less. From these results, it can be understood that the reflectance characteristics (antireflection performance) of the optical elements according to Examples 4 to 6 are excellent.

TABLE 2

| | Material | Refractive index | Example 4 Film thickness (nm) | Example 5 Film thickness (nm) | Example 6 Film thickness (nm) |
|---|---|---|---|---|---|
| Antireflection film 11 | $SiO_2$ | 1.46 | 146.8 | 159.8 | 159.8 |
| Convex element 10 | $Si_3N_4$ | 2.09 | 1200.0 | 1200.0 | 1200.0 |
| Antireflection film 13 | $SiO_2$ | 1.46 | | | 171.9 |
| | $Si_3N_4$ | 2.09 | | | 8.0 |
| Antireflection film 12 | $SiO_2$ | 1.46 | | 198.2 | 48.4 |
| | $Si_3N_4$ | 2.09 | | 12.3 | 7.8 |
| Substrate 50 | quartz | 1.46 | | | |

EXAMPLES 7 TO 9

An optical element according to Example 7 includes the antireflection film 11 as in the optical element 101. An optical element according to Example 8 includes the antireflection films 11 and 12 as in the optical element 102. An optical element according to Example 9 includes the antireflection films 11, 12, and 13 as in the optical element 103. The optical elements according to Examples 7 to 9 are DOEs that are used in the visible range (wavelength 420 to 680 nm).

In Examples 7 to 9, the substrate 50 is formed of S-LAH79 (manufactured by OHARA) having a refractive index of 2.00 (for the light with the wavelength of 550 nm), and each convex element 10 is formed in a cylindrical shape of titanium oxide having a refractive index of 2.47 (for the light with the wavelength of 550 nm). The convex elements 10 are disposed in respective square segment 60, each having a pitch P of 240 nm, and the height H0 of the convex elements 10 is 550 nm. Each undulation structure has an effective diameter of $\phi$4.0 mm and is constituted by periodically disposing 105 annuli, each providing a phase difference of $2\pi$ (diffraction order = 1) for the light with the wavelength of 500 nm. The focal length produced by each undulation structure is 40.0 mm. In Examples 7 to 9, the normalized diameter of the convex elements 10 is varied from 0.20 to 0.80 to change the normalized phase difference from 0 to 1.

Table 3 summarizes the materials and refractive indices of the antireflection films 11 to 13, the convex elements 10, and the substrate 50, as well as the film thicknesses (heights) of the antireflection films 11 to 13 and the convex elements 10, in the optical elements according to Examples 7 to 9. The refractive indices of the materials are values for the light with the wavelength of 550 nm.

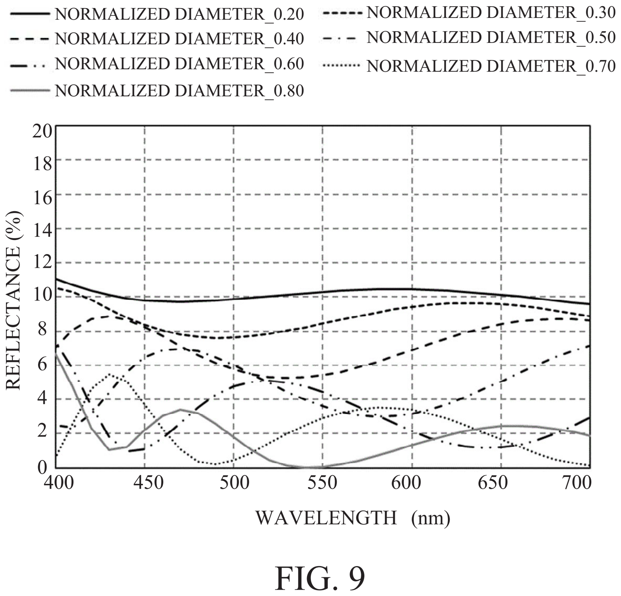

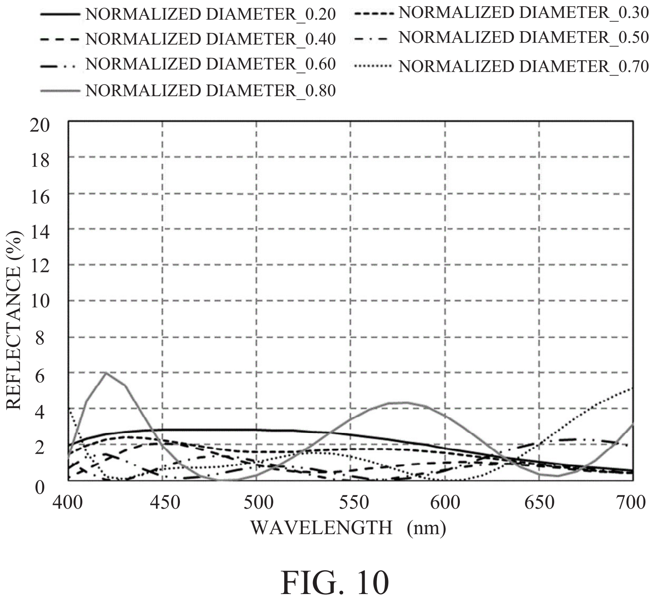

Figs. 9, 10, and 11 illustrate the reflectance characteristics in the visible range when the normalized diameter of the convex elements 10 according to Examples 7, 8, and 9, respectively, is varied to 0.20, 0.30, 0.40, 0.50, 0.60, 0.70, and 0.80. In the range of the normalized diameter from 0.20 to 0.80, the reflectance characteristic of the optical element according to Example 7 is 11.0% or less, the reflectance characteristic of the optical element according to Example 8 is 6.0% or less, and the reflectance characteristic of the optical element according to Example 9 is 2.0% or less. From this result, it can be understood that the reflectance characteristics (antireflection performance) of the optical elements according to Examples 4 to 6 are excellent.

TABLE 3

| | Material | Refractive index | Example 7 Film thickness (nm) | Example 8 Film thickness (nm) | Example 9 Film thickness (nm) |
|---|---|---|---|---|---|
| Antireflection film 11 | SiO$_2$ | 1.46 | 116.1 | 103.7 | 112.2 |
| Convex element 10 | TiO$_2$ | 2.47 | 550.0 | 550.0 | 550.0 |
| Antireflection film 13 | SiO$_2$ | 1.46 | | | 29.5 |
| | TiO$_2$ | 2.47 | | | 21.8 |
| Antireflection film 12 | SiO$_2$ | 1.46 | | 95.9 | 108.0 |
| | TiO$_2$ | 2.47 | | 8.0 | 11.9 |
| | SiO$_2$ | 1.46 | | 33.8 | 32.7 |
| Substrate 50 | S-LAH79 | 2.00 | | | |

EXAMPLE 10

An optical element according to Example 10 includes the antireflection film 11 as in the optical element 101. The optical element according to Example 10 is a DOE that is used in the infrared range (wavelength 800 nm).

In Example 10, the substrate 50 is formed of quartz having a refractive index of 1.46 (for the light with the wavelength of 550 nm), and each convex element 10 is formed in a cylindrical shape of gallium arsenide (GaAs) having a refractive index of 3.45 (for the light with the wavelength of 550 nm). The convex elements 10 are disposed in respective square segment 60, each having a pitch P of 360 nm, and the height H0 of the convex elements is 600 nm. The undulation structure has an effective diameter of $\phi$4.0 mm and is constituted by periodically disposing 105 annuli, each providing a phase difference of $2\pi$ (diffraction order = 1) for the light with the wavelength of 800 nm. The focal length produced by the undulation structure is 40.0 mm. In Example 10, the normalized diameter of the convex elements 10 varies from 0.20 to 0.80 to change the normalized phase difference from 0 to 1.

Table 4 summarizes the materials and refractive indices of the antireflection film 11, the convex elements 10, and the substrate 50, as well as the film thicknesses (heights) of the antireflection film 11 and the convex elements 10, in the optical element according to Example 10. The refractive indices of the materials are values for the light with the wavelength of 550 nm.

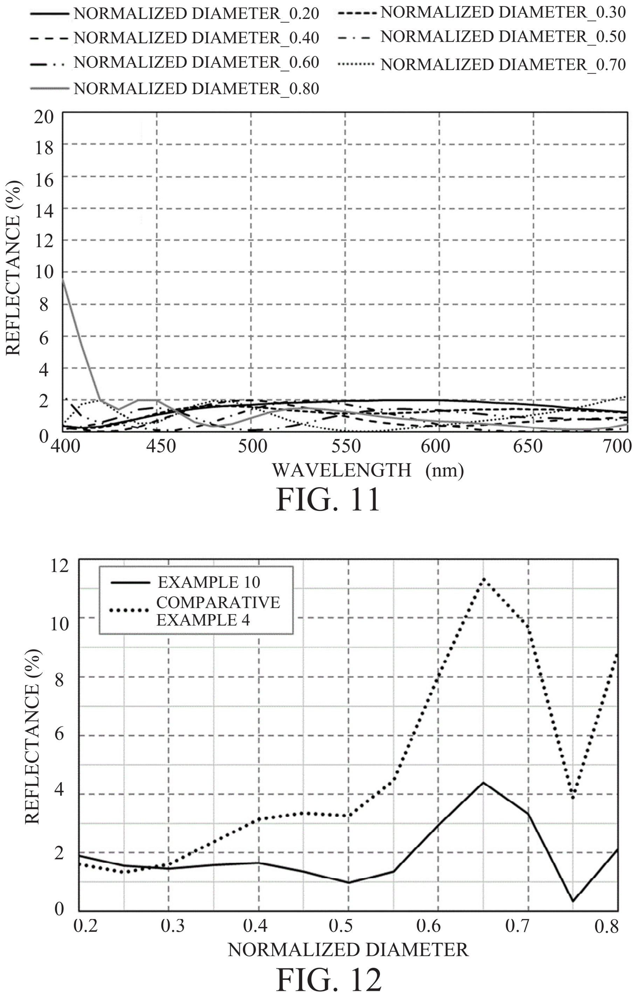

Fig. 12 illustrates the reflectance characteristic for the light with the wavelength of 800 nm when the diameter of the convex elements in the optical element according to Example 10 varies from 0.20 to 0.80. In the range of the normalized diameter from 0.2 to 0.8, the reflectance characteristic of the optical element according to Example 10 are 5.0% or less. From this result, it can be understood that the reflectance characteristic (antireflection performance) of the optical element according to Example 10 is excellent.

TABLE 4

| | | | Example 10 |
|---|---|---|---|
| | Material | Refractive index | Film thickness (nm) |
| Antireflection film 11 | $SiO_2$ | 1.46 | 172.3 |
| Convex element 10 | GaP | 3.45 | 600 |
| Substrate 50 | quartz | 1.46 | |

EXAMPLES 11 TO 13

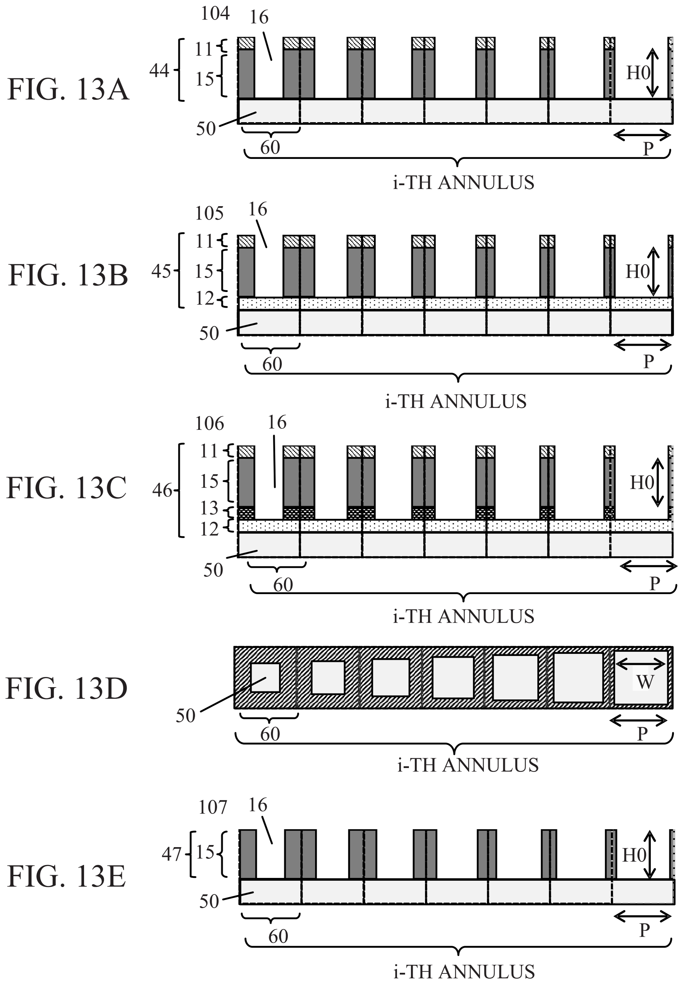

Figs. 13A, 13B, and 13C illustrate a section of the i-th annulus in optical elements 104, 105, and 106, respectively. Fig. 13D illustrates the optical element 104 when viewed from top. The optical elements 105 and 106 when viewed from top are similar to the optical element 104.

The optical elements 104, 105, and 106 include the substrate 50 and undulation structures 44, 45, 46, respectively, formed on the substrate 50. Each of the undulation structures 44 to 46 includes convex elements 15 as structures, concave elements 16, and the antireflection film 11 provided above each convex element 15. As illustrated in Fig. 13D, the undulation structure 44 is constituted by disposing a plurality of rectangular tubular concave elements 16 so as to form the convex elements 15 therebetween. This is the same for the optical elements 105 and 106.

The optical element 105 includes, in addition to the antireflection film 11, the antireflection film 12 provided between each convex element 15 and the substrate 50 so as to cover the substrate 50.

The optical element 106 includes, in addition to the antireflection films 11 and 12, the antireflection film 13 provided between each convex element 15 and the antireflection film 12 (below the convex element 15).

The heights of the undulation structures 44, 45, and 46 are constant in all areas. In order to form a phase distribution of $2m\pi$ in each annulus, the width W of the concave elements 16 in each undulation structure is varied to change the element filling factor of the convex elements 15 (and the antireflection films 11 to 13) in the segments 60.

The optical elements 104 to 106 can be manufactured by the manufacturing method similar to that of the optical elements 101 to 103.

An optical element according to Example 11 includes the antireflection film 11 as in the optical element 104. An optical element according to Example 12 includes the antireflection films 11 and 12 as in the optical element 105. An optical element according to Example 13 includes the antireflection films 11, 12, and 13 as in the optical element 106. The optical elements according to Examples 11 to 13 are DOEs that are used in the visible range (wavelength 420 to 680 nm).

In Examples 11 to 13, the substrate 50 is formed of S-BAH28 (manufactured by OHARA) having a refractive index of 1.72 (for the light with the wavelength of 550 nm), and each convex element 15 is formed in a cylindrical shape of silicon nitride having a refractive index of 2.09 (for the light with the wavelength of 550 nm). The convex elements 15 are disposed in respective square segment 60, the pitch P of the segments 60 is 240 nm, and the height H0 of the convex elements 15 is 700 nm. Each undulation structure has an effective diameter of $\phi4.0$ mm and is constituted by periodically disposing 105 annuli, each providing a phase difference of $2\pi$ (diffraction order = 1) for the light with the wavelength of 500 nm. The focal length produced by each undulation structure is 40.0 mm. In Examples 11 to 13, the normalized diameter of the convex elements 15 is varied from 0.20 to 0.80 to change the normalized phase difference from 0 to 1.

Table 5 summarizes the materials and refractive indices of the antireflection films 11 to 13, the convex elements 15, and the substrate 50, as well as the film thicknesses (heights) of the antireflection films 11 to 13 and the convex elements 15, in the optical elements according to Examples 11 to 13. The refractive indices of the materials are values for the light with the wavelength of 550 nm.

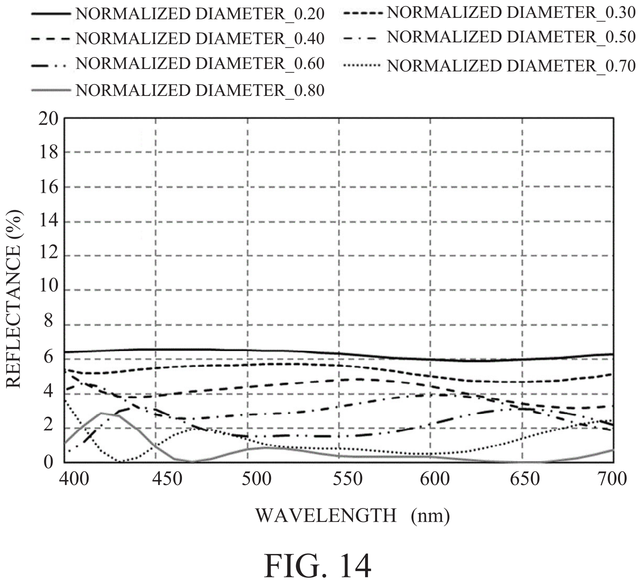

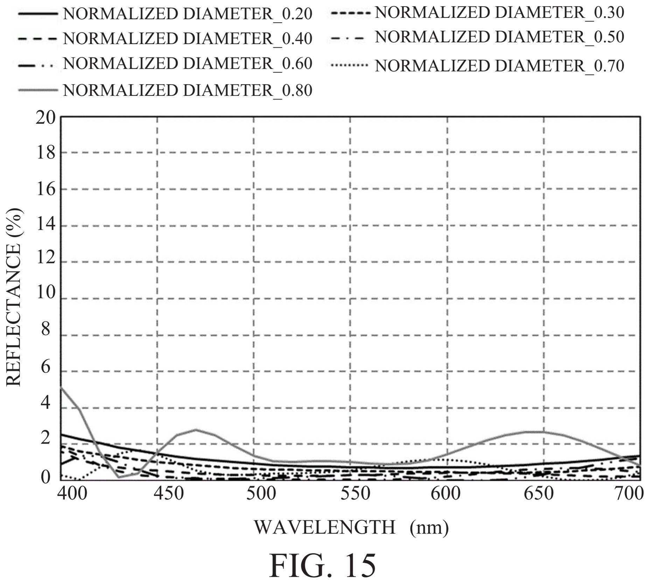

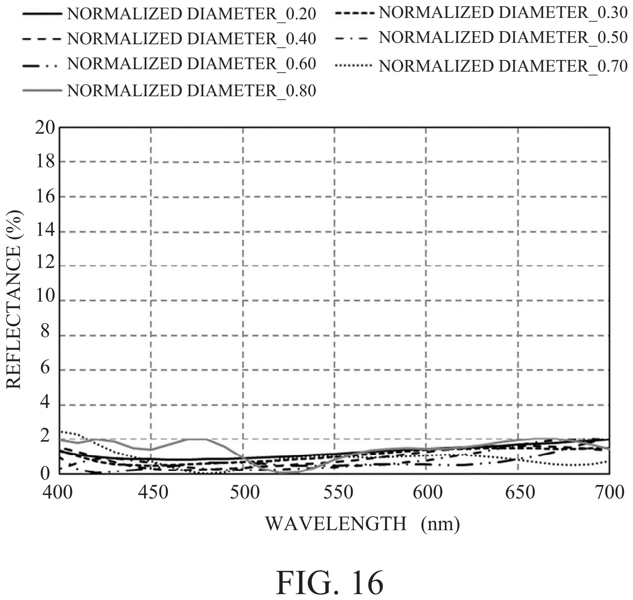

Figs. 14, 15, and 16 illustrate the reflectance characteristics in the visible range when the normalized diameter of the convex elements 15 in the optical elements according to Examples 11, 12, and 13, respectively, is varied to 0.20, 0.30, 0.40, 0.50, 0.60, 0.70, and 0.80. In the range of the normalized diameter from 0.2 to 0.8, the reflectance characteristic of the optical element according to Example 11 is 7.0% or less, the reflectance characteristic of the optical element according to Example 12 is 3.0% or less, and the reflectance characteristic of the optical element according to Example 13 is 2.0% or less. From this result, it can be understood that the reflectance characteristics (antireflection performance) of the optical elements according to Examples 11 to 13 are excellent.

TABLE 5

| | Material | Refractive index | Example 11 Film thickness (nm) | Example 12 Film thickness (nm) | Example 13 Film thickness (nm) |
|---|---|---|---|---|---|
| Antireflection film 11 | SiO$_2$ | 1.46 | 116.0 | 109.5 | 124.5 |
| Convex element 15 | Si$_3$N$_4$ | 2.09 | 700.0 | 700.0 | 700.0 |
| Antireflection film 13 | SiO$_2$ | 1.46 | | | 31.5 |
| | Si$_3$N$_4$ | 2.09 | | | 15.6 |
| Antireflection film 12 | SiO$_2$ | 1.46 | | 94.4 | 82.1 |
| Substrate 50 | S-BAH28 | 1.72 | | | |

EXAMPLES 14 TO 16

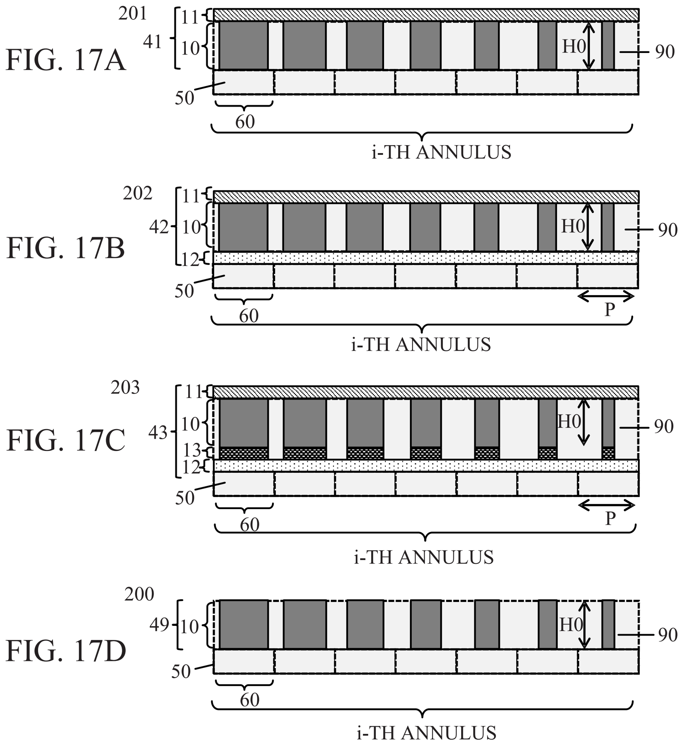

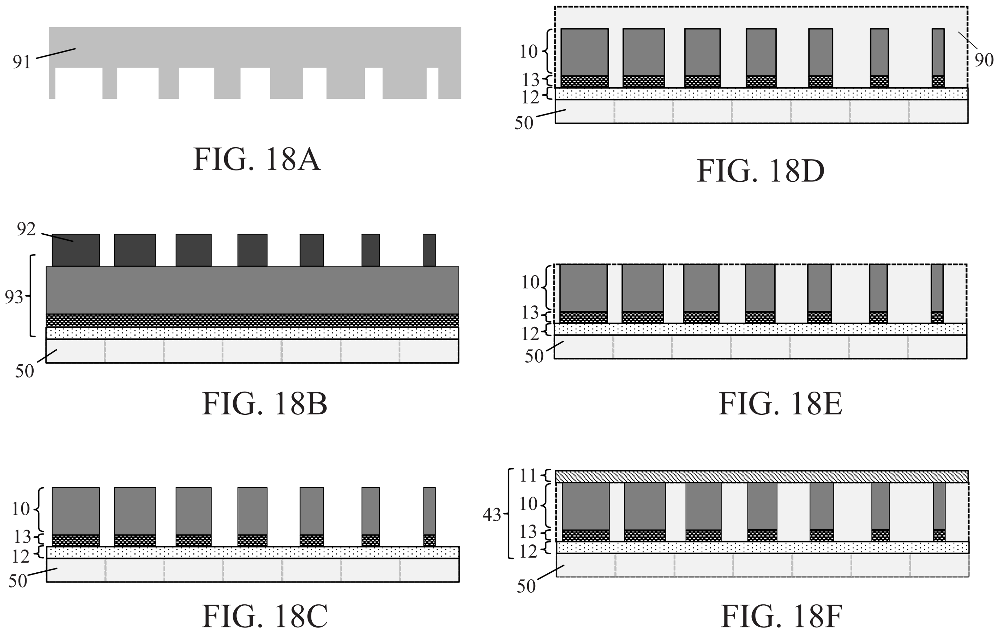

Figs. 17A, 17B, and 17C illustrate a section of the i-th annulus in optical elements 201, 202, and 203, respectively.
In the optical elements 101 to 103 illustrated in Figs. 1A, 1B, and 1C, spaces around (above and between) the plurality of convex elements 10 are filled with air. However, in the optical elements 201 to 203, spaces between the plurality of convex elements 10 are filled with a material 90 as a medium other than air. Accordingly, in the optical elements 201 to 203, the antireflection film 11 is provided with a uniform film thickness not only on the convex elements 10 but also on the material 90. The antireflection films 12 and 13 are similar to those in the optical elements 102 and 103.
Similarly to the optical elements 101 to 103, the optical elements 201 to 203 can be manufactured by using lithography technology. Figs. 18A, 18B, 18C, 18D, 18E, and 18F illustrate a method for manufacturing the optical element 203, as an example.
Fig. 18A illustrates the mold 91 formed by an electron beam, a laser, or the like and having a shape inverted from the concavo-convex shape of the undulation structure 43. As illustrated in Fig. 18B, the resist material 92 is applied onto the film 93 deposited on the substrate 50, the mold 91 is pressed against the resist material 92, and irradiation with ultraviolet or the like is performed to form, in the resist material 92, a shape inverted from the concavo-convex shape of the mold 91.
Thereafter, as illustrated in Fig. 18D, the material 90 is formed around the convex elements 10 by atomic layer deposition (ALD). Then, as illustrated in Fig. 18E, the material 90 on the convex elements 10 is removed by etching. In addition, as illustrated in Fig. 18F, the antireflection film 11 is deposited above the convex elements 10 and the material 90 by vapor deposition.
The method for forming the antireflection film 11 is not limited to vapor deposition but may be a dry deposition method such as sputtering, or a wet deposition method such as a sol-gel method.
An optical element according to Example 14 includes the antireflection film 11 as in the optical element 201. An optical element according to Example 15 includes the antireflection films 11 and 12 as in the optical element 202. An optical element according to Example 16 includes the antireflection films 11, 12, and 13 as in the optical element 203. The optical elements according to Examples 14 to 16 are DOEs that are used in the visible range (wavelength 420 to 680 nm).
In Examples 14 to 16, the substrate 50 is formed of quartz having a refractive index of 1.46 (for the light with the wavelength of 550 nm), and each convex element 10 is formed in a cylindrical shape of silicon nitride having a refractive index of 2.09 (for the light with the wavelength of 550 nm). The material 90 is silicon dioxide (SiO$_2$) having a refractive index of 1.46 (for the light with the wavelength of 550 nm). The convex elements 10 are disposed in respective square segment 60, the pitch P of the segments 60 is 240 nm, and the height H0 of the convex elements is 1250 nm. Each undulation structure has an effective diameter of φ4.0 mm and is constituted by periodically disposing 105 annuli, each providing a phase difference of $2\pi$ (diffraction order = 1) for the light with the wavelength of 500 nm. The focal length produced by each undulation structure is 40.0 mm. In Examples 14 to 16, the normalized diameter of the convex elements 10 is varied from 0.20 to 0.80 to change the normalized phase difference from 0 to 1.
Table 6 summarizes the materials and refractive indices of the material 90, the antireflection films 11 to 13, the convex elements 10, and the substrate 50, as well as the film thicknesses (heights) of the antireflection films 11 to 13 and the convex elements 10, in the optical elements according to Examples 14 to 16. The refractive indices of the materials are values for the light with the wavelength of 550 nm.

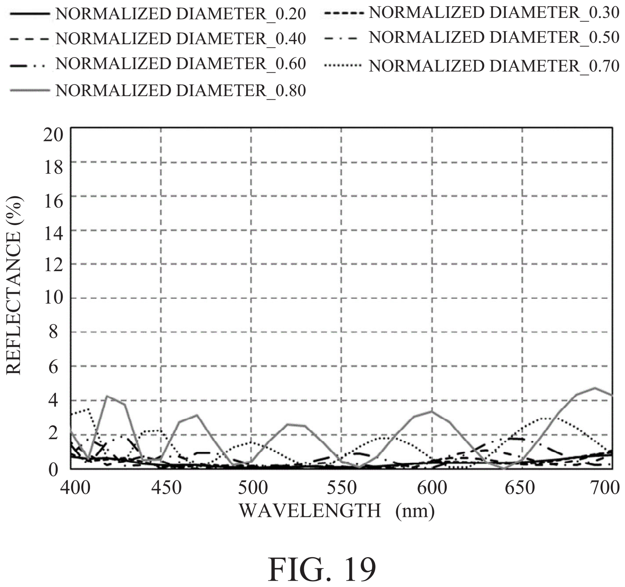

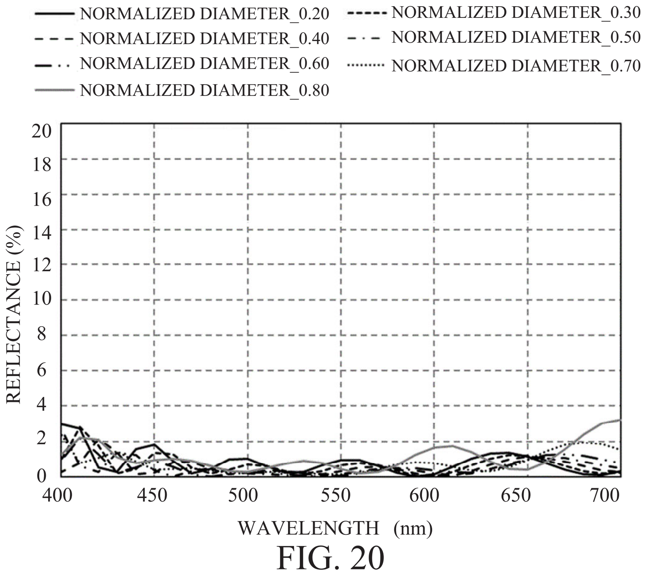

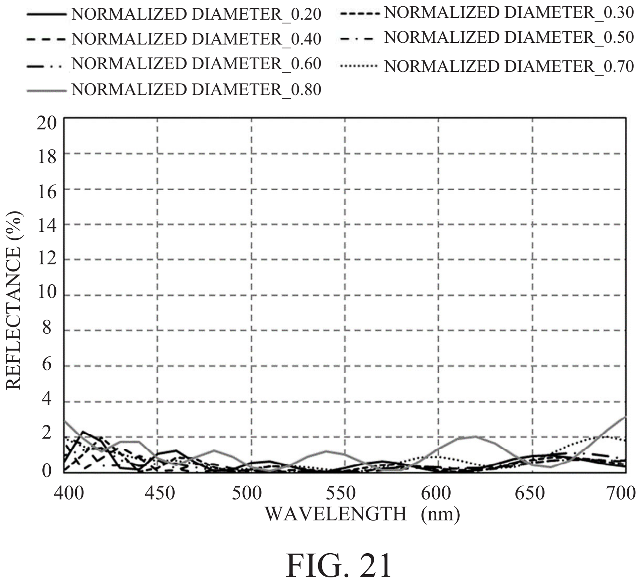

Figs. 19, 20, and 21 illustrate the reflectance characteristics in the visible range when the normalized diameter of the convex elements 10 in the optical elements according to Examples 14, 15, and 16, respectively, is varied 0.20, 0.30, 0.40, 0.50, 0.60, 0.70, and to 0.80. In the range of the normalized diameter from 0.20 to 0.80, the reflectance characteristic of the optical element according to Example 14 is 4% or less, and the reflectance characteristics of the optical elements according to Examples 15 and 16 are 2.0% or less. From this result, it can be understood that the reflectance characteristics (antireflection performance) of the optical elements according to Examples 14 to 16 are excellent.

TABLE 6

| | | | Example 14 | Example 15 | Example 16 |
|---|---|---|---|---|---|
| | Material | Refractive index | Film thickness (nm) | Film thickness (nm) | Film thickness (nm) |
| Material 90 | SiO$_2$ | 1.46 | | | |
| Antireflection film 11 | Hollow Silica | 1.25 | 102.9 | 103.1 | 104.5 |
| Convex element 10 | Si$_3$N$_4$ | 2.09 | 1250 | 1250 | 1250 |
| Antireflection film 13 | SiO$_2$ | 1.46 | | | 4.0 |
| | Si$_3$N$_4$ | 2.09 | | | 30.8 |
| Antireflection film 12 | SiO$_2$ | 1.46 | | 34.9 | 32.8 |
| | Si$_3$N$_4$ | 2.09 | | 8.2 | 4.4 |
| Substrate 50 | quartz | 1.46 | | | |

EXAMPLES 17 AND 18

An optical element according to Example 17 includes the antireflection film 11 as in the optical element 201. An optical element according to Example 18 includes the antireflection films 11 and 12 as in the optical element 202. The optical elements according to Examples 17 and 18 are DOEs that are used in the infrared range (wavelength 800 nm).

In Examples 17 and 18, the substrate 50 is formed of quartz having a refractive index of 1.46 (for the light with the wavelength of 550 nm), and each convex element 10 is formed in a cylindrical shape of gallium arsenide having a refractive index of 3.45 (for the light with the wavelength of 550 nm). The convex elements 10 are disposed in respective square segment 60, the pitch P of the segments 60 is 360 nm, and the height H0 of the convex elements is 1070 nm. Each undulation structure has an effective diameter of $\phi$4.0 mm and is constituted by periodically disposing 105 annuli, each providing a phase difference of $2\pi$ (diffraction order = 1) for the light with the wavelength of 800 nm. The focal length produced by each undulation structure is 40.0 mm. In Examples 17 and 18, the normalized diameter of the convex elements 10 varies from 0.20 to 0.80 to change the normalized phase difference from 0 to 1.

Table 7 summarizes the materials and refractive indices of the material 90, the antireflection films 11 to 13, the convex elements 10, and the substrate 50, as well as the film thicknesses (heights) of the antireflection films 11 to 13 and the convex elements 10, in the optical elements according to Examples 17 and 18. The refractive indices of the materials are values for the light with the wavelength of 550 nm.

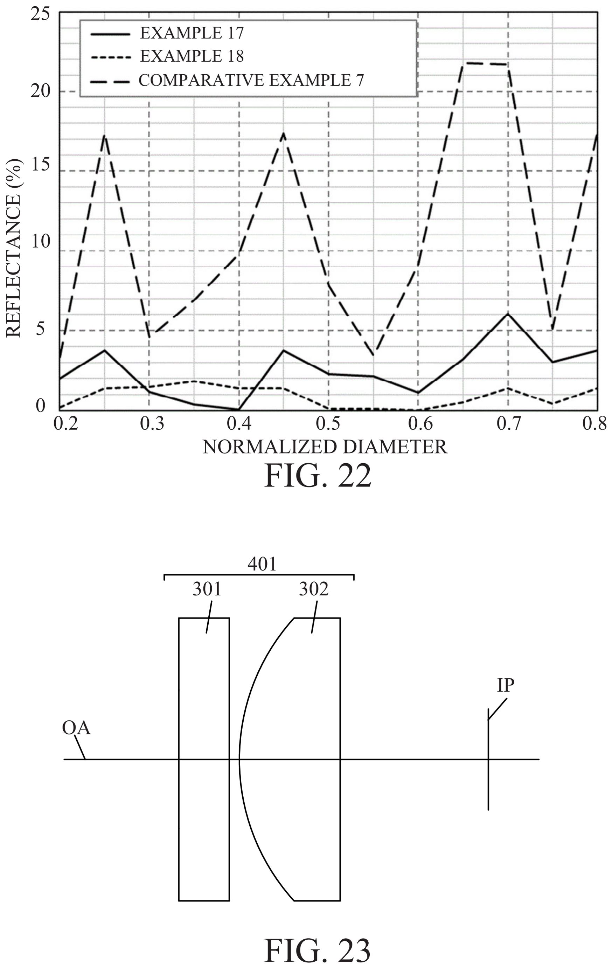

Fig. 22 illustrates the reflectance characteristics for the light with the wavelength of 800 nm when the diameter of the convex elements 10 in the optical elements according to Examples 17 and 18 is varied from 0.20 to 0.80. In the range of the normalized diameter from 0.20 to 0.80, the reflectance characteristic of the optical element according to Example 17 is 6.0% or less, and the reflectance characteristic of the optical element according to Example 18 is 2.0% or less. From this result, it can be understood that the reflectance characteristics (antireflection performance) of the optical elements according to Examples 17 and 18 are excellent.

TABLE 7

| | | | Example 17 | Example 18 |
|---|---|---|---|---|
| | Material | Refractive index | Film thickness (nm) | Film thickness (nm) |
| Material 90 | SiO$_2$ | 1.46 | | |
| Antireflection film 11 | MgF2 | 1.38 | 154.9 | 148.7 |
| Convex element 10 | GaP | 3.45 | 1070 | 1070 |
| Antireflection film 12 | SiO$_2$ | 1.46 | | 62.0 |
| | GaP | 3.45 | | 5.3 |

(continued)

|  |  |  | Example 17 | Example 18 |
| --- | --- | --- | --- | --- |
|  | Material | Refractive index | Film thickness (nm) | Film thickness (nm) |
| Substrate 50 | quartz | 1.46 |  |  |

OPTICAL SYSTEM

Fig. 23 illustrates an optical system 401 using any one of the optical elements according to Examples 1 to 18. In Fig. 23, reference numeral 301 denotes the optical element of each example, and reference numeral 302 denotes a lens element, and OA denotes the optical axis of the optical system. In addition, IP denotes an image plane.

The lens element 302 is constituted by a refract lens, a DOE, a mirror, or the like, and one or a plurality of such elements are disposed. The optical element 301 and the lens element 302 are disposed along the optical axis OA, and incident light is imaged on the image plane IP. In an image pickup apparatus, the image plane of an image sensor such as a CCD sensor or a CMOS sensor, or the film surface of a silver halide film is disposed at the image plane IP.

This optical system 400 is not limited to an image pickup apparatus but is also applicable to a variety of optical apparatuses such as a binocular, a projector, and a telescope.

IMAGE PICKUP APPARATUS

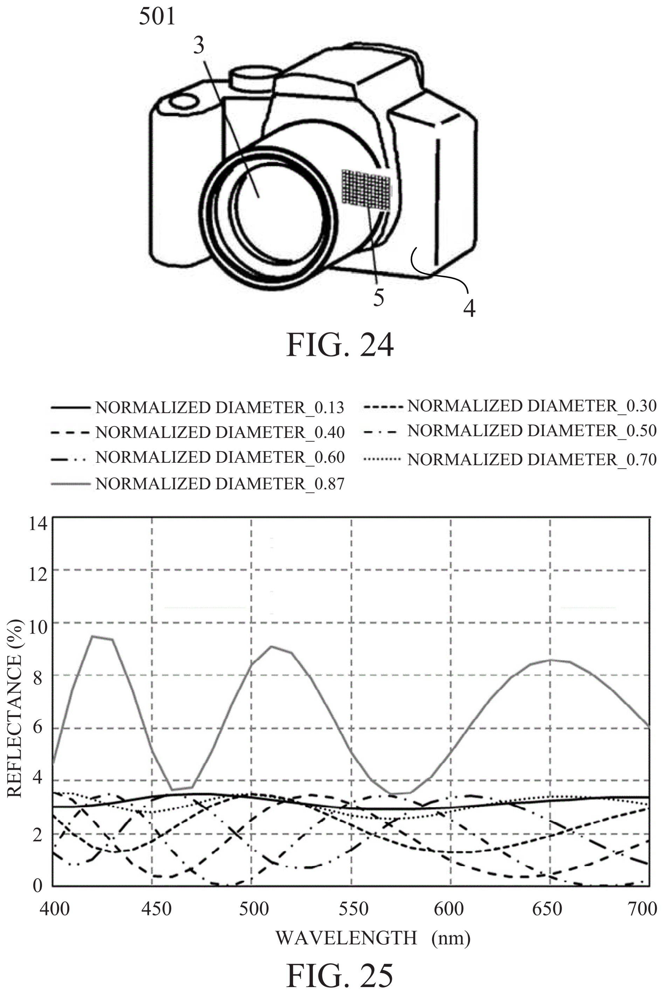

Fig. 24 illustrates an image pickup apparatus (digital camera) 501 including the optical system 401 in Fig. 23. In Fig. 24, reference numeral 4 denotes a camera body, and reference numeral 3 denotes an imaging optical system that includes the optical system 401. Reference numeral 5 denotes an image sensor provided in the camera body 4 and configured to receive and photoelectrically convert an optical image formed through the imaging optical system 3 (that is, capture an object image formed through the optical system). The camera body 4 may be a single-lens reflex camera including a quick-return mirror or may be a mirrorless camera including no quick-return mirror.

Thus, an image pickup apparatus that can properly capture an image by applying an optical system including the optical element according to each example to an image pickup apparatus such as a digital still camera can be obtained.

COMPARATIVE EXAMPLES 1 TO 7

An optical element according to comparative example 1 is a comparative example relative to the optical elements according to Examples 1 to 3 and does not include antireflection films, similarly to the optical element 100 illustrated in Fig. 2A.

The configuration of the optical element according to comparative example 1 is the same as those of the optical elements according to Examples 1 to 3 except that no antireflection film 11 is provided. The substrate 50 is formed of quartz having a refractive index of 1.46 (for the light with the wavelength of 550 nm), and each convex element 10 is formed in a cylindrical shape of silicon nitride having a refractive index of 2.09 (for the light with the wavelength of 550 nm). The pitch P of the segments 60 is 240 nm, and the height H0 of the convex elements is 700 nm. The undulation structure has an effective diameter of $\phi$4.0 mm and includes 105 annuli, similarly to the optical elements according to Examples 1 to 3. The normalized diameter of the convex elements 10 is 0.13 to 0.87 as in Examples 1 to 3. The optical elements according to Examples 1 to 3 have a configuration in which the antireflection films 11 to 13 are provided on the optical element according to comparative example 1.

An optical element according to comparative example 2 is a comparative example relative to the optical elements according to Examples 4 to 6, and an optical element according to comparative example 3 is a comparative example relative to Examples 7 to 9. An optical element according to comparative example 4 is a comparative example relative to the optical element according to Example 10. Comparative examples 2 to 4 do not include antireflection films, similarly to the optical element 100 illustrated in Fig. 2A.

An optical element according to comparative example 5 is a comparative example relative to the optical elements according to Examples 11 to 13 and does not include antireflection films, similarly to an optical element 107 illustrated in Fig. 13E. An optical element according to comparative example 6 is a comparative example relative to the optical elements according to Examples 14 to 16, and an optical element according to comparative example 7 is a comparative example relative to the optical elements according to Examples 17 and 18. Comparative examples 6 and 7 do not include antireflection films in the undulation structure 40, similarly to an optical element 200 illustrated in Fig. 17D.

Table 8 summarizes the materials and refractive indices of the substrate 50 and the convex elements 10, the height of the convex elements 10, and the material 90 and its refractive index in Comparative examples 1 to 7.

Fig. 25 illustrates the reflectance characteristic of the optical element according to comparative example 1, Fig.

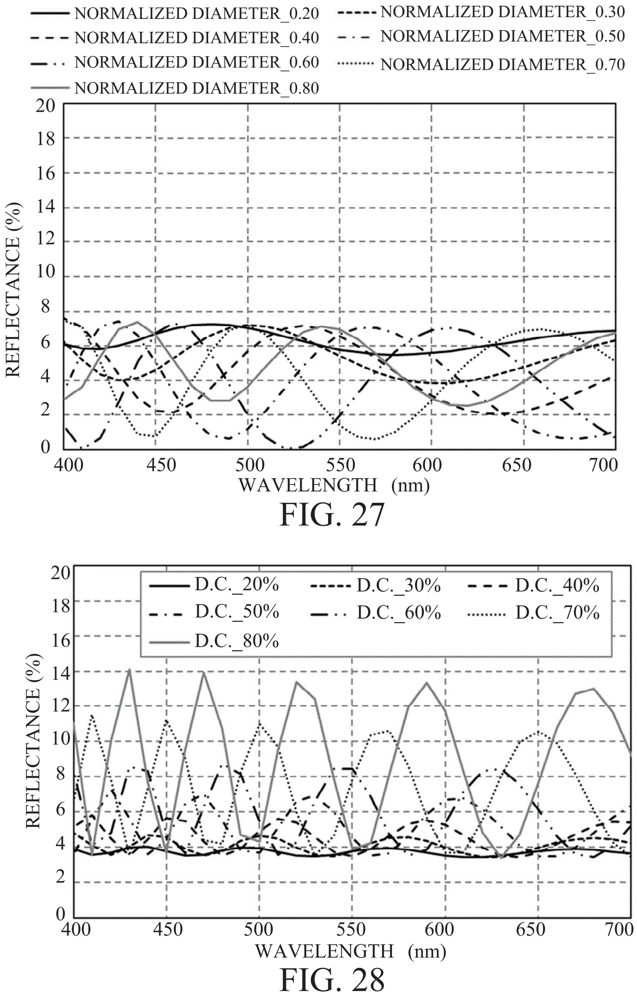

26 illustrates the reflectance characteristic of the optical element according to comparative example 3, Fig. 27 illustrates the reflectance characteristic of the optical element according to comparative example 5, and Fig. 28 illustrates the reflectance characteristic of the optical element according to comparative example 6. The reflectance characteristic of the optical element according to comparative example 2 is illustrated in Fig. 8, the reflectance characteristic of the optical element according to comparative example 4 is illustrated in Fig. 12, and the reflectance characteristic of the optical element according to comparative example 5 is illustrated in Fig. 22.

From the reflectance characteristic according to Examples and comparative examples, it can be understood that the optical elements according to Examples 1 to 18 have higher antireflection performance than the optical elements according to comparative examples 1 to 7 without antireflection films.

TABLE 8

|  |  | Comparative Example | | | | | | |
|---|---|---|---|---|---|---|---|---|
|  |  | 1 | 2 | 3 | 4 | 5 | 6 | 7 |
| Material 90 | Material |  |  |  |  |  | $SiO_2$ | $SiO_2$ |
|  | Refractive index |  |  |  |  |  | 1.46 | 1.46 |
| Convex element 10 | Material | $Si_3N_4$ | $Si_3N_4$ | $TiO_2$ | GaP | $Si_3N_4$ | $Si_3N_4$ | GaP |
|  | Refractive index | 2.09 | 2.09 | 2.47 | 3.44 | 2.09 | 2.09 | 3.44 |
|  | Hight (nm) | 700 | 1200 | 550 | 600 | 700 | 1250 | 1070 |
| Substrate 50 | Material | quartz | quartz | S-LAH79 | quartz | S-BAH28 | quartz | quartz |
|  | Refractive index | 1.46 | 1.46 | 2.00 | 1.46 | 1.72 | 1.46 | 1.46 |

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Each example can provide an optical element having excellent antireflection performance.

**Claims**

1. An optical element (101 to 106) comprising:

a substrate (50);
an undulation structure (41 to 46) formed on the substrate; and
a first antireflection film (11) formed opposite to the substrate in the undulation structure,
**characterized in that** the undulation structure includes a plurality of undulation zones, and each undulation zone includes a plurality of structures (10),
wherein the following inequalities are satisfied:

$$1.4 \leq n_p \leq 3.6$$

$$\kappa_p \leq 0.001$$

$$0.7 \times \sqrt{n_p} \leq n_{1L} \leq 1.2 \times \sqrt{n_p}$$

where $n_p$ is a refractive index of a first material forming the plurality of structures for light with a wavelength of 550 nm, $\kappa_p$ is an extinction coefficient of the first material, and $n_{1L}$ is a refractive index of a second material forming any one of one or more layers forming the first antireflection film for the light with the wavelength of 550 nm.

2. The optical element according to claim 1, **characterized in that** the undulation structure is formed on a first surface of the substrate,
wherein each undulation zone includes, as the plurality of structures, a plurality of structures having mutually different widths in a direction along the first surface.

3. The optical element according to claim 1 or 2, **characterized in that** among the one or more layers forming the first antireflection film, a layer having a lowest refractive index or a layer farthest from the substrate is formed of the second material.

4. The optical element according to any one of claims 1 to 3, **characterized in that** the undulation structure is formed on a first surface of the substrate,

   wherein spaces around the plurality of structures are filled with air, and
   wherein the first antireflection film is formed within a width of each of the plurality of structures in a direction along the first surface on the plurality of structures.

5. The optical element according to any one of claims 1 to 3, **characterized in that** spaces between the plurality of structures are filled with a medium other than air,
   wherein the first antireflection film is formed on the plurality of structures and the medium.

6. The optical element according to any one of claims 1 to 5, further comprising a second antireflection film (12) formed between the substrate and the plurality of structures so as to cover the substrate,
   **characterized in that** the following inequalities are satisfied:

$$1.3 \leq n_{2L} \leq 1.7$$

$$80 \leq d_{2L} \leq 200$$

   where $n_{2L}$ is a refractive index of a third material forming any one of one or more layers forming the second antireflection film for the light with the wavelength of 550 nm, and $d_{2L}$ (nm) is a thickness of a layer of the third material.

7. The optical element according to claim 6, **characterized in that** a layer closest to the plurality of structures among the one or more layers forming the second antireflection film is formed of the third material.

8. The optical element according to claim 6 or 7, **characterized in that** the second antireflection film includes a layer formed of the third material and a layer formed of a fourth material,
   wherein the following inequality is satisfied:

$$n_p \leq n_{2H} \leq 3.0$$

   where $n_{2H}$ is a refractive index of the fourth material for the light with the wavelength of 550 nm.

9. The optical element according to any one of claims 6 to 8, **characterized in that** the undulation structure is formed on a first surface of the substrate,

   wherein the optical element further comprises a third antireflection film (13) formed between the second antireflection film and the plurality of structures within a width of each of the plurality of structures in a direction along the first surface, and
   wherein the following inequality is satisfied:

$$1.3 \leq n_{3L} \leq 1.7$$

   where $n_{3L}$ is a refractive index of a fifth material forming any one of one or more layers forming the third antireflection film for the light with the wavelength of 550 nm.

10. The optical element according to claim 9, **characterized in that** a layer closest to the plurality of structures among the one or more layers forming the third antireflection film is formed of the fifth material.

11. The optical element according to claim 9 or 10, **characterized in that** the third antireflection film includes a layer formed of the fifth material and a layer formed of a sixth material,
    wherein the following inequality is satisfied:

$$n_p \le n_{3H} \le 3.0$$

where $n_{3H}$ is a refractive index of the sixth material for the light with the wavelength of 550 nm.

12. The optical element according to any one of claims 1 to 11, **characterized in that** the following inequality is satisfied:

$$1.4 \le n_s \le 2.5$$

where $n_s$ is a refractive index of a material forming the substrate for the light with the wavelength of 550 nm.

13. The optical element according to any one of claims 1 to 12, **characterized in that** the undulation structure is formed on a first surface of the substrate,
wherein the following inequality is satisfied:

$$150 \text{ nm} \le P \le 400 \text{ nm}$$

where P is a pitch of the plurality of structures in a direction along the first surface.

14. The optical element according to any one of claims 1 to 13, **characterized in that** the first material includes at least one of silicon nitride, titanium oxide, gallium nitride, gallium arsenide, silicon carbide, aluminum oxide, and silicon oxide.

15. The optical element according to any one of claims 1 to 14, **characterized in that** mutually different phase modulation amounts are provided to incident light within each undulation zone.

16. The optical element according to any one of claims 1 to 15, **characterized in that** the optical element is a metalens that converges or diverges incident light through the undulation structure.

17. An optical system (401) comprising:
the optical element (301) according to any one of claims 1 to 16.

18. An image pickup apparatus (501) comprising:

an optical system (3, 401) including the optical element (301) according to any one of claims 1 to 16; and
an image sensor (5) configured to capture an object image through the optical system.

101

W

11
41
10
50

H0 H1

80

P

60

i-TH ANNULUS

(i+1)-TH ANNULUS

## FIG. 1A

102

11
42
10
12
50

H0 H2

P

60

i-TH ANNULUS

(i+1)-TH ANNULUS

## FIG. 1B

EP 4 764 620 A1

FIG. 1C

FIG. 1D

EP 4 764 620 A1

FIG. 2A

FIG. 2B

EP 4 764 620 A1

EP 4 764 620 A1

FIG. 3A

FIG. 3B

FIG. 3C

FIG. 4

FIG. 5

FIG. 6

—— NORMALIZED DIAMETER_0.13 ----- NORMALIZED DIAMETER_0.30
— — NORMALIZED DIAMETER_0.40 —·— NORMALIZED DIAMETER_0.50
—··— NORMALIZED DIAMETER_0.60 ········ NORMALIZED DIAMETER_0.70
—— NORMALIZED DIAMETER_0.87

**FIG. 7**

— EXAMPLE 4  ----- EXAMPLE 5
— — EXAMPLE 6  ········ COMPARATIVE EXAMPLE 2

**FIG. 8**

FIG. 9

FIG. 10

FIG. 11

FIG. 12

FIG. 13A

104  16

44 { 11 {
15 {

50

H0

60

P

i-TH ANNULUS

FIG. 13B

105  16

45 { 11 {
15 {
12 {

50

H0

60

P

i-TH ANNULUS

FIG. 13C

106  16

46 { 11 {
15 {
13 {
12 {

50

H0

60

P

i-TH ANNULUS

FIG. 13D

50

W

60

P

i-TH ANNULUS

FIG. 13E

107  16

47 { 15 {

50

H0

60

P

i-TH ANNULUS

FIG. 14

FIG. 15

FIG. 16

FIG. 17A

201

11
41
10
50
H0
90
60
i-TH ANNULUS

FIG. 17B

202

11
42
10
12
50
H0
90
P
60
i-TH ANNULUS

FIG. 17C

203

11
10
43
13
12
50
H0
90
P
60
i-TH ANNULUS

FIG. 17D

200

49
10
50
H0
90
60
i-TH ANNULUS

FIG. 18A

FIG. 18B

FIG. 18C

FIG. 18D

FIG. 18E

FIG. 18F

FIG. 19

FIG. 20

FIG. 21

FIG. 22

FIG. 23

501

FIG. 24

NORMALIZED DIAMETER_0.13 ---- NORMALIZED DIAMETER_0.30
- - - NORMALIZED DIAMETER_0.40 - · - NORMALIZED DIAMETER_0.50
- · · NORMALIZED DIAMETER_0.60 ········· NORMALIZED DIAMETER_0.70
—— NORMALIZED DIAMETER_0.87

FIG. 25

FIG. 26

FIG. 27

FIG. 28

Europäisches
Patentamt

European
Patent Office

Office européen
des brevets

# EUROPEAN SEARCH REPORT

**Application Number**

EP 25 22 2456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/061987 A1 (NILT SWITZERLAND GMBH [CH]) 20 April 2023 (2023-04-20)<br>* abstract *<br>* Paragraphs [0001], [0028], [0029], [0030], [0031], [0034], [0035], [0036], [0038], [0039], [0040], [0042], [0043], [0044], [0045], [0049] *<br>* pages 1-20 *<br>----- | 1-17 | INV.<br>G02B1/00<br>G02B1/118<br>G02B5/18<br>G02B1/115 |
| X | JP 2010 281876 A (CANON KK) 16 December 2010 (2010-12-16)<br>* abstract *<br>* Paragraphs [0001], [0003], [0009], [0012], [0013], [0017], [0018], [0023], [0031], [0032], [0041], [0042]) *<br>* figures 1-17 *<br>----- | 1,18 | |
| X | EP 3 444 643 A1 (LUMENTUM OPERATIONS LLC [US]) 20 February 2019 (2019-02-20)<br>* abstract *<br>* Paragraphs [0001], [0004], [0011], [0031], [0040], [0041], [0042], [0043], [0047], [0051], [0052], [0065], [0066], [0070] *<br>* figures 1-6 *<br>----- | 1 | |
| X | JP 2013 088757 A (SEMICONDUCTOR ENERGY LAB) 13 May 2013 (2013-05-13)<br>* abstract *<br>* Paragraphs [0001], [0011], [0055], [0057], [0060], [0062], [0063], [0067], [0085], [0107], [0115], [0127] *<br>* figures 1-14 *<br>----- | 1 | |

**TECHNICAL FIELDS SEARCHED (IPC)**

G02B

The present search report has been drawn up for all claims

| Place of search | Date of completion of the search | Examiner |
|---|---|---|
| Munich | 12 May 2026 | Kienle, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 2456

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2026

| Patent document cited in search report | | | Publication date | Patent family member(s) | | Publication date |
|---|---|---|---|---|---|---|
| WO 2023061987 | A1 | | 20-04-2023 | CN | 118355297 A | 16-07-2024 |
| | | | | EP | 4416538 A1 | 21-08-2024 |
| | | | | KR | 20240074865 A | 28-05-2024 |
| | | | | US | 2024402392 A1 | 05-12-2024 |
| | | | | WO | 2023061987 A1 | 20-04-2023 |
| JP 2010281876 | A | | 16-12-2010 | JP | 2010281876 A | 16-12-2010 |
| | | | | US | 2010302642 A1 | 02-12-2010 |
| EP 3444643 | A1 | | 20-02-2019 | CN | 109407191 A | 01-03-2019 |
| | | | | EP | 3444643 A1 | 20-02-2019 |
| | | | | IL | 261086 A | 31-01-2019 |
| | | | | JP | 7330675 B2 | 22-08-2023 |
| | | | | JP | 7348991 B2 | 21-09-2023 |
| | | | | JP | 2019035954 A | 07-03-2019 |
| | | | | JP | 2022130387 A | 06-09-2022 |
| | | | | KR | 20190019029 A | 26-02-2019 |
| | | | | TW | 201910915 A | 16-03-2019 |
| | | | | TW | 202219629 A | 16-05-2022 |
| | | | | US | 2019056542 A1 | 21-02-2019 |
| | | | | US | 2021026051 A1 | 28-01-2021 |
| JP 2013088757 | A | | 13-05-2013 | NONE | | |

EPO FORM P0459

For more details about this annex : see Official Journal of the European Patent Office, No. 12/82

**REFERENCES CITED IN THE DESCRIPTION**

**Patent documents cited in the description**

- WO 2022150816 A